# EUROPÄISCHE PATENTSCHRIFT

(11) **EP 2 110 527 B1**
(45) Veröffentlichungstag und Bekanntmachung des Hinweises auf die Patenterteilung: **04.01.2012**
(21) Anmeldenummer: 09002006.6
(22) Anmeldetag: 13.02.2009
(51) Int. Cl.: F01N 5/02, F01N 1/08, F02G 5/02

(54) **Nutzfahrzeug mit einem Verbrennungsmotor und einem dessen Wärmequellen ausnutzenden Wärmerückgewinnungssystem**
Commercial vehicle with a combustion engine and a heat recovery system using its heat sources
Véhicule utilitaire doté d'un moteur à combustion interne et système de récupération de chaleur utilisant sa source de chaleur

(30) Priorität: 14.04.2008 AT 5762008
(43) Veröffentlichungstag der Anmeldung: 21.10.2009
(73) Patentinhaber: MAN Nutzfahrzeuge Österreich AG, 4400 Steyr (AT)
(72) Erfinder: Raab, Gottfried, 4320 Perg (AT); Raup, Markus, 4800 Attnang-Puchheim (AT); Klammer, Josef, 9900 Lienz (AT)

(56) Entgegenhaltungen:
- EP-A1- 1 249 585
- EP-A1- 1 510 674
- WO-A2-00/31400
- DE-A1- 4 141 051

## Beschreibung

Die Erfindung betrifft gemäß dem Oberbegriff des Anspruchs 1 ein Nutzfahrzeug, insbesondere Lastkraftwagen, mit einem Verbrennungsmotor und einem Wärmerückgewinnungssystem sowie weiteren Merkmalen, wie im Detail angegeben.

Bei Nutzfahrzeugen, insbesondere Lastkraftwagen, tritt aufgrund der Verwendung immer leistungsstärkerer Verbrennungsmotoren zunehmend das Problem auf, dass die Kühlung nur schwierig zu bewerkstelligen ist, weil die nötigen großvolumigen Kühler kaum mehr im Fahrzeug unterzubringen sind. Zur Vermeidung solch großvolumiger Kühler sind schon die verschiedensten Vorschläge bekannt geworden, die alle darauf hinaus laufen, die Wärme aus dem Motor über das Kühlwasser anders als durch herkömmliche Kühlung abzuführen. Eine solche bekannte Methode ist die Ausnutzung der Wärmequellen des Motors für eine Wärmerückgewinnung, wobei den Wärmequellen wie Kühlwasser oder heißen Motoraggregaten Wärme entzogen und diese Wärme nutzbringend herangezogen wird. Im zugehörigen Mediumkreislauf sind ist wenigstens eine Pumpe, ein Verdampfer, ein Expander und ein Kondensator vorgesehen. Alle diese Zusatzaggregate benötigen im Fahrzeug einen gewissen Einbauraum.

Aus der WO 00/31400 A1 ist es bereits bekannt, den heißen Abgasstrom einer Brennkraftmaschine dazu zu nutzen, um das flüssige Arbeitsmedium eines einen Expander aufweisenden Mediumkreislaufes zu verdampfen. Konkret wird hier gemäß einer Ausführungsform die zu verdampfende Flüssigkeit spiralförmig um ein abgasführendes Abgasrohr herumgeleitet und verdampft.

Ein vom Prinzip her ähnlicher Aufbau ist auch aus der EP 1 249 585 A1 bekannt, bei der an einen Abgasauslass einer Brennkraftmaschine ein durch mehrere Bauteilabschnitte ausgebildeter Verdampfer angeschlossen ist, der vom heißen Abgas durchströmt wird. Die einzelnen Verdampferabschnitte werden dabei durch unterschiedliche medienführende gewundene bzw. spiralförmig ausgebildete Rohrleitungsabschnitte gebildet.

Aus der DE 41 41 051 A1 ist schließlich eine abgasführende Brennkraftmaschine bekannt, bei der ein Abgasrohr über die gesamte Rohrlänge von einer medienführenden Rohrleitung ummantelt ist, und zwar auch im Bereich des Katalysators und eines Schalldämpfers. Mit dem verdampften Arbeitsmedium wird dann eine Dampfturbine angetrieben, die auf ihrer Abtriebsseite kraftschlüssig mit einem Kurbeltrieb gekoppelt ist.

Die Erfindung setzt sich zur Aufgabe, trotz des beschränkt im Nutzfahrzeug vorhandenen Bauraumes eine Platz sparende Unterbringung für den Verdampfer zu finden.

Diese Aufgabe wird erfindungsgemäß durch die im Anspruch 1 angegebene Art der Unterbringung und Ausgestaltung des Verdampfers im gattungsgemäßen Nutzfahrzeug gelöst.

Vorteilhafte Ausgestaltungen und Details der erfindungsgemäßen Lösung sind in den Unteransprüchen angegeben.

Durch die erfindungsgemäße Unterbringung des Verdampfers in oder an einem Schalldämpfer oder einem Auspuffrohr ist sichergestellt, dass die Unterbringung anderer Fahrzeugteile nicht behindert ist. Außerdem ist mit einem solchermaßen untergebrachten Verdampfer eine optimale Ausnutzung der Restwärme des Abgases für eine Überführung eines flüssigen Kreislaufmediums in dessen dampfförmigen Zustand möglich, welches dampfförmige Medium dann wiederum einem Expander zuführbar und mittels diesem in an die Brennkraftmaschine leistungssteigernd abgebbare mechanische Energie umwandelbar ist.

Ein solches Wärmerückgewinnungssystem hat auch den weiteren Vorteil, dass, nachdem auch andere Wärmequellen des Verbrennungsmotors wie das Kühlwasser und/oder rückgeführtes Abgas mit heranziehbar sind, die Wärmeentfaltung auch leistungsstarker Verbrennungsmotoren begrenzbar und so auch die nötige Kühlleistung der Kühler und damit auch deren Größe begrenzbar ist.

Nachfolgend ist die erfindungsgemäße Lösung anhand mehrerer in der Zeichnung dargestellter Ausführungsbeispiele näher erläutert. In der Zeichnung zeigen:
- Fig. 1: schematisch eine Sattelzugmaschine mit Schalldämpfer und erfindungsgemäß in- tegriertem Verdampfer,
- Fig. 2: eine Ausführungsform eines Schalldämpfers, wie im Fahrzeug gemäß Fig. 1 ver- wendet, im Längsschnitt,
- Fig. 3: den Schalldämpfer von Fig. 2 im Querschnitt,
- Fig. 4: schematisch eine Sattelzugmaschine mit Schalldämpfer und einer gegenüber Fig. 1 anderen Unterbringung des Verdampfers,
- Fig. 5: eine Ausführungsform eines Schalldämpfers, wie im Fahrzeug gemäß Fig. 4 ver- wendet, im Querschnitt,
- Fig. 6: den Schalldämpfer von Fig. 5 im Längsschnitt,
- Fig. 7: schematisch eine Sattelzugmaschine mit einer weiteren alternativen Unterbrin- gungsart eines Verdampfers,
- Fig. 8: einen erfindungsrelevanten Ausschnitt aus dem Fahrzeug gemäß Fig. 7,
- Fig. 9: schematisch eine Sattelzugmaschine mit einer weiteren alternativen Unterbrin- gungsart eines Verdampfers,
- Fig. 10: einen erfindungsrelevanten Ausschnitt aus dem Fahrzeug gemäß Fig. 9,
- Fig. 11: schematisch eine Sattelzugmaschine mit einer weiteren alternativen Unterbrin- gungsart für einen Schalldämpfer und einen Verdampfer, und
- Fig. 12: einen erfindungsrelevanten Ausschnitt aus dem Fahrzeug gemäß Fig. 11.

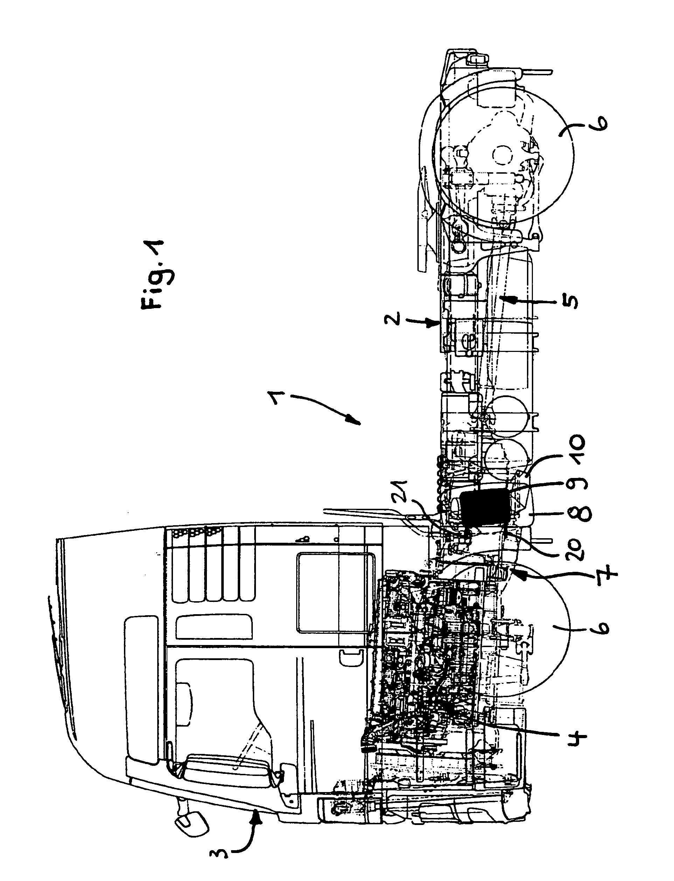

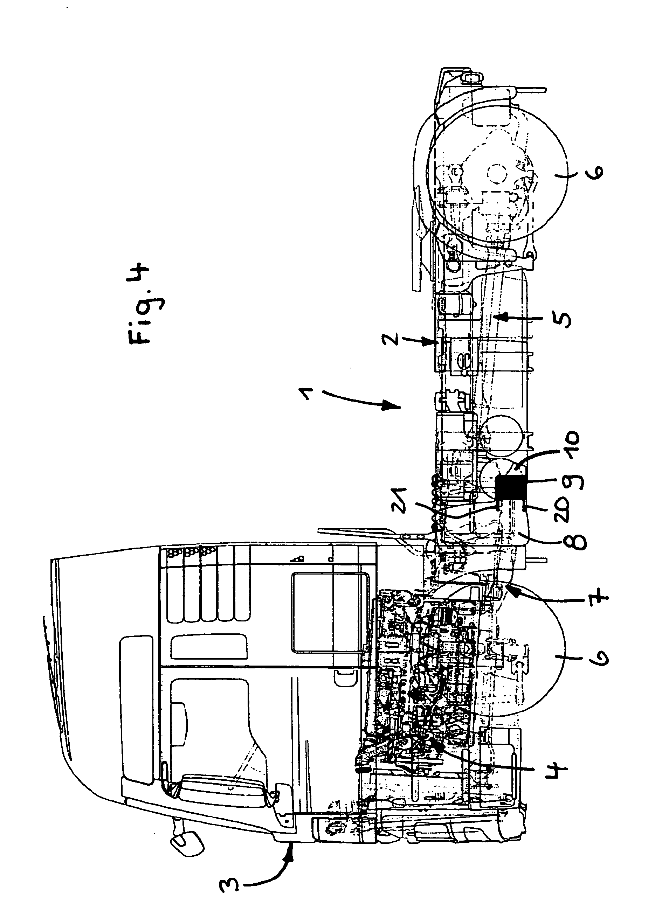

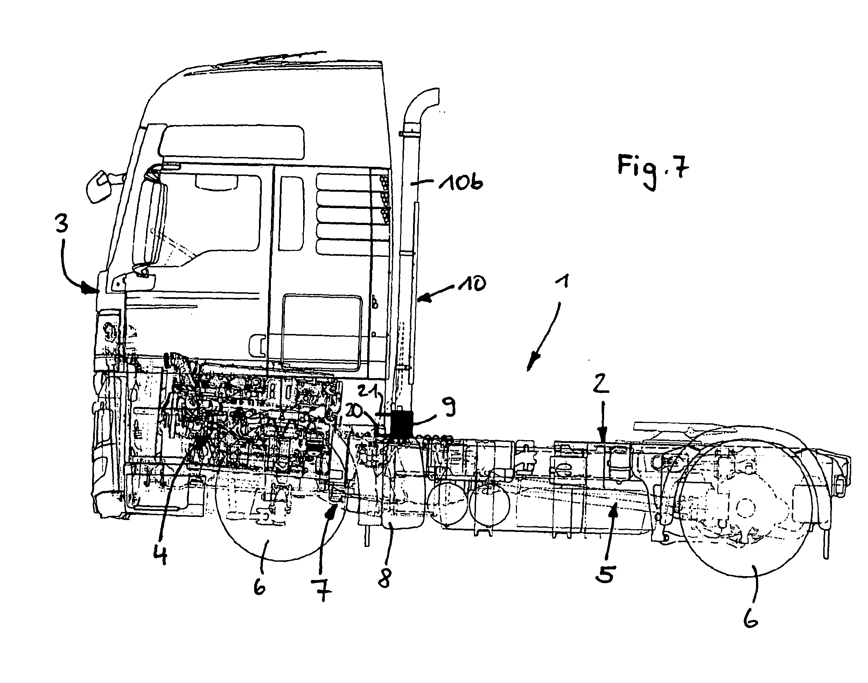

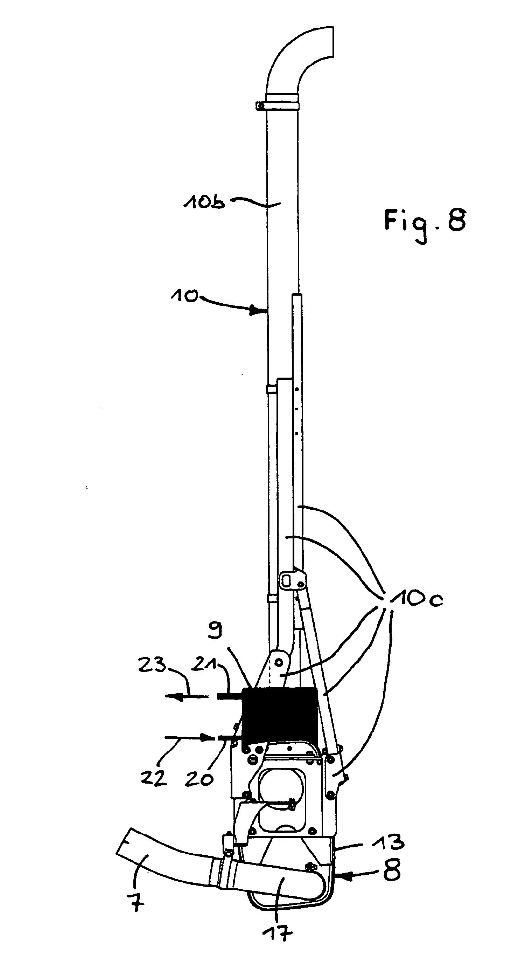

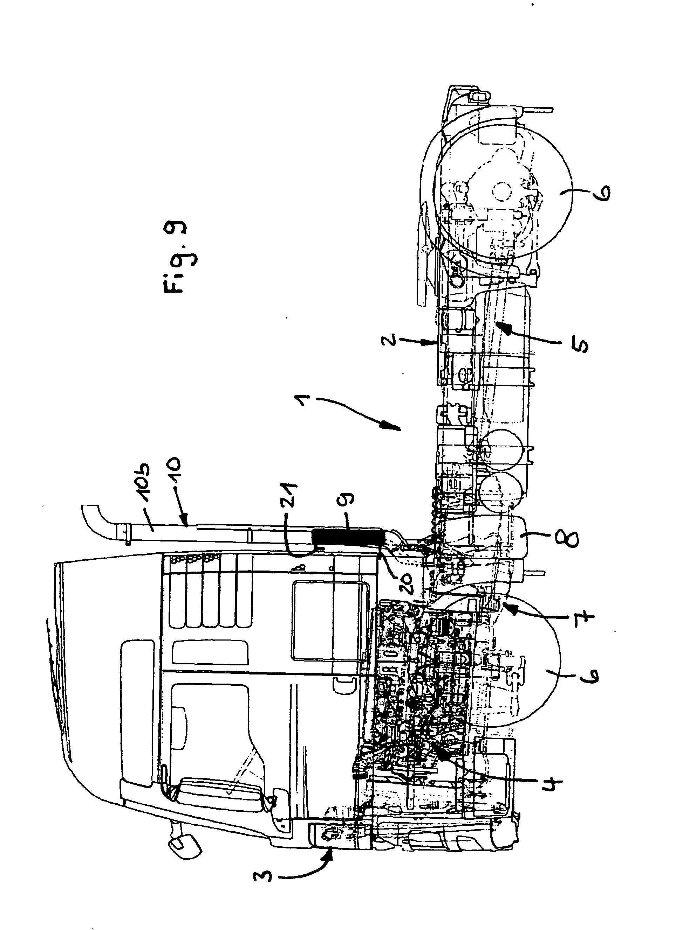

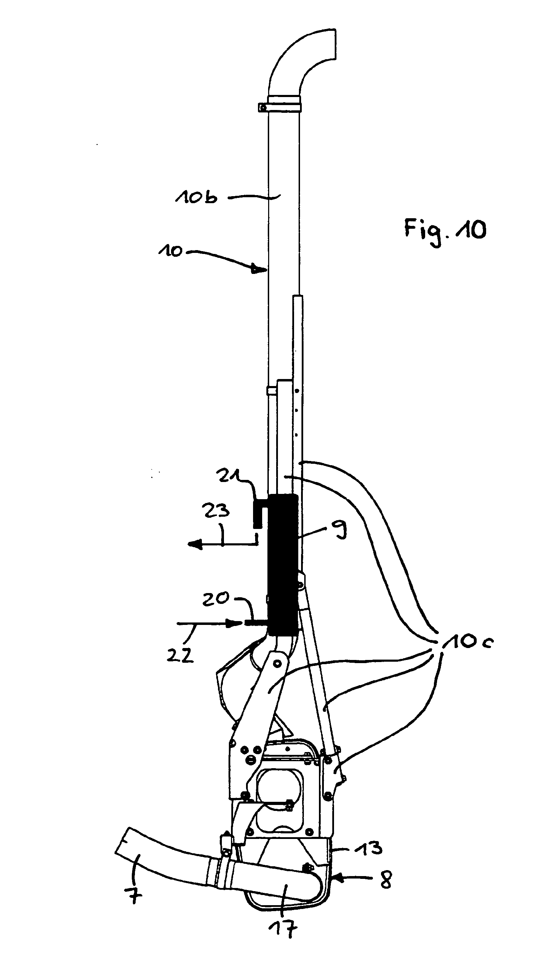

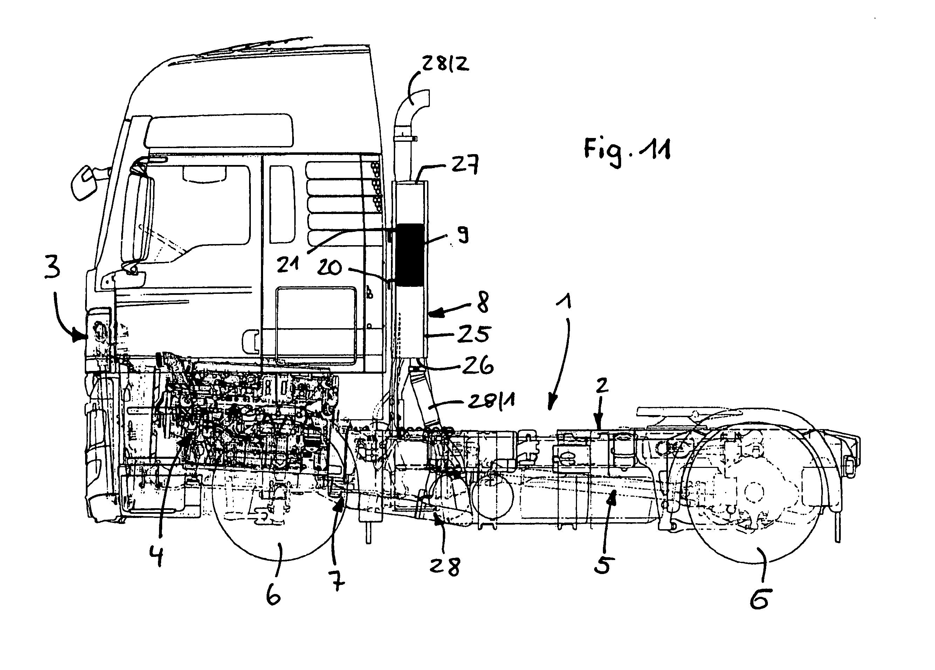

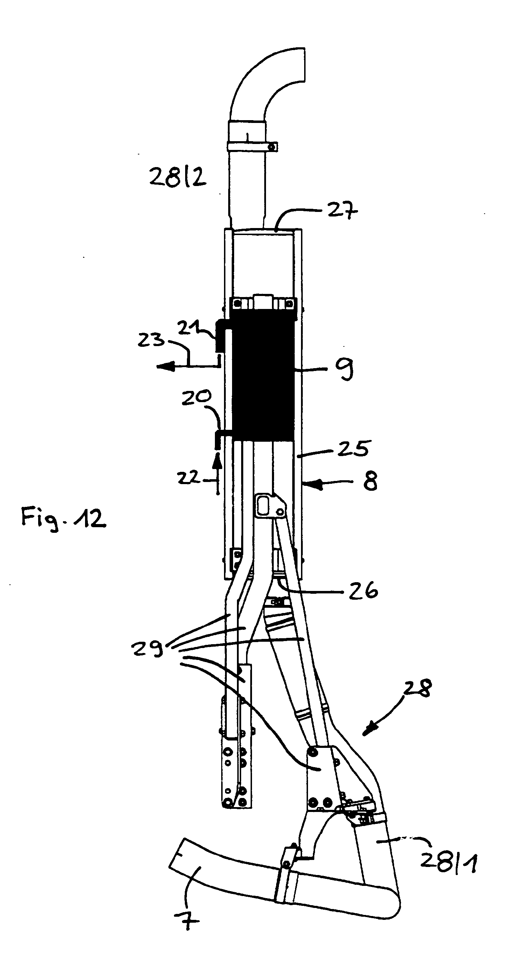

In den Figuren 1, 4, 7, 9 und 11 ist als Beispiel für ein Nutzfahrzeug 1 jeweils eine Sattelzugmaschine dargestellt. Das Nutzfahrzeug 1 weist ein Fahrgestell 2 und ein darauf gelagertes Fahrerhaus 3 auf. Unterhalb des Fahrerhauses 3 ist ein Verbrennungsmotor 4 angeordnet, der über einen eine Kupplung und ein Schaltgetriebe oder ein Automatikgetriebe aufweisenden Triebstrang 5 auf die anzutreibenden Räder 6 des Nutzfahrzeugs 1 wirkt. Dem Verbrennungsmotor 4 ist ein dessen Wärmequellen ausnutzendes Wärmerückgewinnungssystem zugeordnet, auf das nur in jenen Teilen näher eingegangen ist, soweit diese Teile Verbindungen zu der erfindungsgemäßen Lösung haben. Der Verbrennungsmotor 4 weist vorzugsweise eine gekühlte Abgasrückführung und einen ein- oder mehrstufigen Abgasturbolader auf. Im Abgasstrang 7 des Verbrennungsmotors 4 ist ein Schalldämpfer 8 angeordnet. Dem Verbrennungsmotor 4 ist als Teil des Wärmerückgewinnungssystems ein Mediumkreislauf zugeordnet, in dem die Abwärme des Verbrennungsmotors 4 und/oder heißer Motoraggregate wie Abgasrückführleitung(en), Turbolader etc. sowie von Betriebsmedien wie Kühlwasser, Ladeluft, Abgas etc. durch geeignete Vorrichtungen in leistungssteigende Nutzenergie umwandelbar ist. Im Mediumkreislauf ist wenigstens eine Pumpe, ein Verdampfer 9, ein Expander und ein Kondensator vorgesehen. Die Erfindung bezieht sich auf Ort und Art der Unterbringung sowie Ausgestaltung der aufnehmenden Organe für den Verdampfer 9. Dafür gibt es verschiedene Möglichkeiten. In einer ersten Version - siehe das Ausführungsbeispiel gemäß Fig. 1 bis 3 - ist der Verdampfer 9 in den Schalldämpfer 8 integriert. Er ist dort entweder in das Auspuffendrohr 10 eingebaut oder ersetzt das Auspuffendrohr 10 partiell. In einer zweiten Version - siehe das Ausführungsbeispiel gemäß Fig. 4 bis 6 - ist der Verdampfer 9 außen am Schalldämpfer 8, dort seitlich unten angebaut und das Auspuffendrohr 10 setzt sich nach dem Verdampfer 9 mit seinem Endabschnitt 10b fort. In einer dritten Version - siehe das Ausführungsbeispiel gemäß Fig. 7, 8 - ist der Verdampfer 9 ebenfalls außen am Schalldämpfer 8, hier aber oben an diesem angebaut. Auch hier setzt sich das Auspuffendrohr 10 nach dem Verdampfer 9 mit seinem vertikal nach oben gerichteten Endabschnitt 10b fort. In einer vierten Version - siehe das Ausführungsbeispiel gemäß Fig. 9 und 10 - ist der Verdampfer 9 in das vom Schalldämpfer 8 abgehende und hinter dem Fahrerhaus 3 hochgezogene Auspuffendrohr 10 entweder eingebaut oder ersetzt das Auspuffendrohr 10 partiell. In einer fünften Version - siehe das Ausführungsbeispiel gemäß Fig. 11 und 12 - ist der Verdampfer 9 in einen Schalldämpfer 8 integriert, der in ein hinter dem Fahrerhaus 3 hochgezogenes Auspuffrohr 28 eingebaut ist.

Nachfolgend ist auf Details dieser erfindungsgemäßen Verdampfer-Anordnungen näher eingegangen.

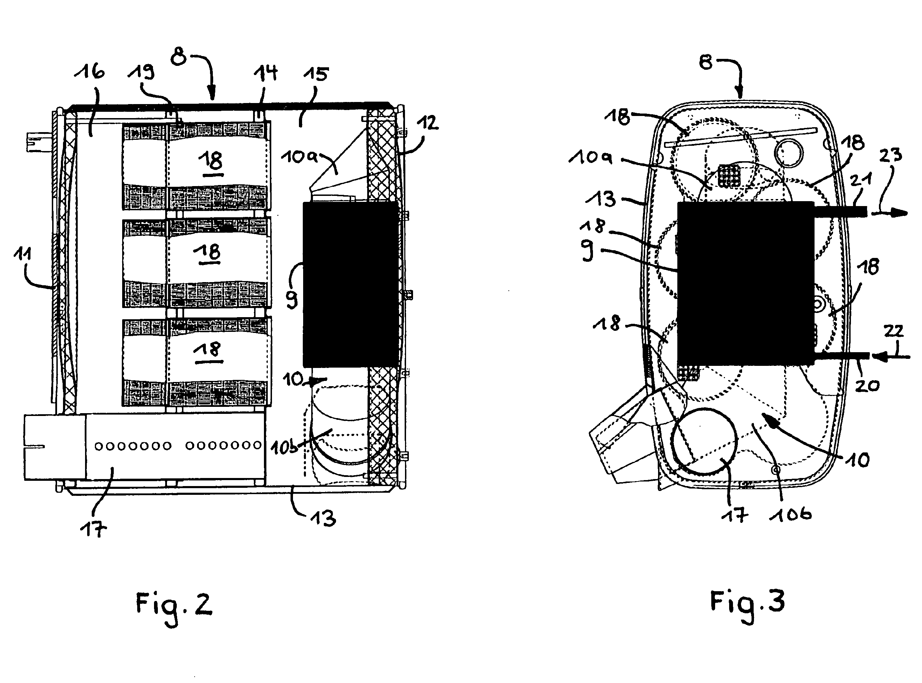

Der in das Nutzfahrzeug 1 gemäß Fig. 1 benachbart zum Verbrennungsmotor 4 eingebaute und am Rahmen des Fahrgestells 2 befestigte Schalldämpfer 8 kann wie in Fig. 2 und 3 dargestellt realisiert sein. Dieser Schalldämpfer 8 ist dabei tonnenförmig ausgebildet und weist einen vorderen Boden 11 und einen hinteren Boden 12, eine die beiden Böden 11, 12 verbindende hohlzylindrische Umfangsaußenwand 13, innen einen durch eine Zwischenwand 14 von einem Auslassraum 15 getrennten Einlassraum 16, ein in den Einlassraum 16 ausmündendes Einlassrohr 17 und ein Auspuffendrohr 10 auf. Das Auspuffendrohr 10 ist mit seinem Eingangsabschnitt 10a im Auslassraum 15 angeordnet und nach dem Verdampfer 9 mit seinem Ausgangsabschnitt 10b im Bereich des den Auslassraum 15 begrenzenden Boden 12 entweder durch diesen oder durch die Umfangsaußenwand 13 aus dem Schalldämpfer 8 herausgeführt. Der Verdampfer 9 ist dabei entweder in den Eingangsabschnitt 10a des Auspuffendrohres 10 eingebaut oder ersetzt einen Teil des Auspuffendrohres 10 zwischen dessen Eingangsabschnitt 10a und Ausgangsabschnitt 10b. In letzterem Fall ist der Verdampfer 9 am Boden 12 des Schalldämpfers 8 befestigt. Im dargestellten Schalldämpfer 8 sind außerdem mehrere Abgasnachbehandlungsmodule 18 angeordnet und dort durch die gasdichte Zwischenwand 14 sowie eine von dieser beabstandete gasdurchlässige Tragwand 19 gehalten. Jeder dieser Abgasnachbehandlungsmodule 18 beinhaltet in einem Gehäuse eingebaut beispielsweise einen Partikelabscheider oder -filter und/oder wenigstens einen Katalysator. Wie aus Fig. 2 und 3 ersichtlich, ist in dieser Ausführungsform der Verdampfer 9 innen an dem den Auslassraum 15 begrenzenden Boden 12 des Schalldämpfers 8 befestigt.

Am Verdampfer 9 ist unten ein Anschlussstutzen 20 für die Einleitung von flüssigem Kreislaufmedium und oben ein Anschlussstutzen 21 für die Ableitung des in dampfförmigen Aggregatzustand überführten Kreislaufmediums vorgesehen. Beide Anschlussstutzen 20, 21 sind vom Verdampfer 9 ausgehend durch den benachbarten Boden 12 oder benachbarten Bereich der Umfangsaußenwand 13 des Schalldämpfers 8 hindurch aus diesem herausgeführt und dort außen mit einer durch einen Pfeil 22 symbolisierten Zuleitung für das flüssige Kreislaufmedium bzw. mit einer durch einen Pfeil 23 symbolisierten Ableitung für das dampfförmige Kreislaufmedium verbunden. In Fig. 1 ist die Lage des Verdampfers 9 am Nutzfahrzeug 1 durch ein schwarz eingefärbtes Feld im Bereich des Schalldämpfers 8 sichtbar gemacht.

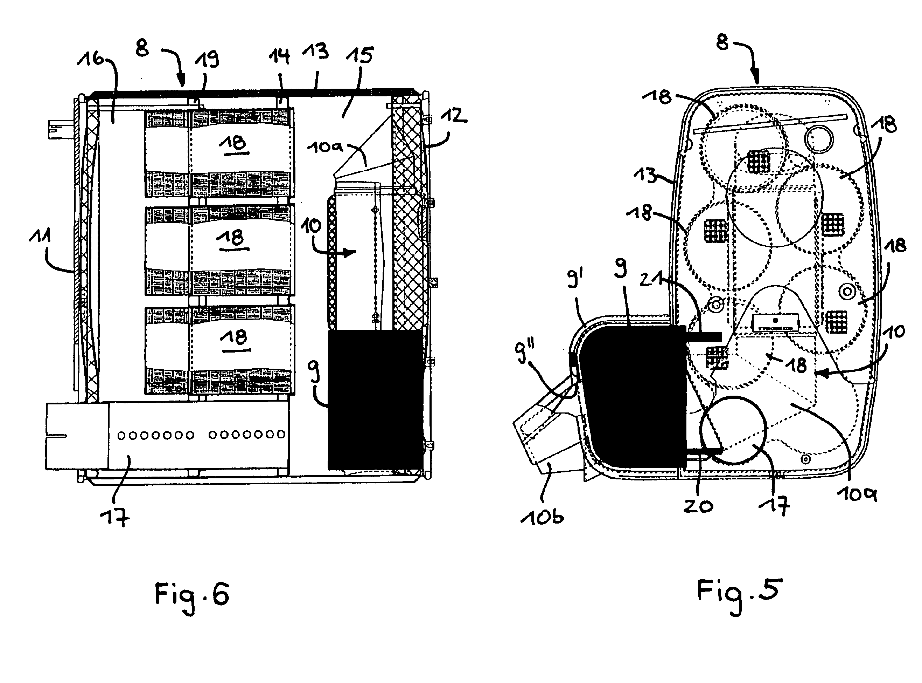

Im Fall des Fahrzeugs gemäß Fig. 4 kommt vorzugsweise ein Schalldämpfer 8 zur Anwendung, der, wie aus Fig. 5 und 6 ersichtlich, weitgehend jenen von Fig. 2 und 3 entspricht, aber den Verdampfer 9 an anderer Stelle, nämlich außen seitlich unten angebaut aufweist. Es werden daher in Fig. 5 und 6 für gleiche bzw. einander entsprechende Teile die gleichen Bezugszeichen wie in Fig. 2 und 3 verwendet. In diesem Beispiel ist - wie gut aus Fig. 5 ersichtlich - der Verdampfer 9 in ein Gehäuse 9' integriert, das im Bereich des den Auslassraum 15 begrenzenden Bodens 12 seitlich außen unten an der Umfangsaußenwand 13 des Schalldämpfers 8 befestigt ist. In diesem Bereich weist die Umfangsaußenwand 13 des Schalldämpfers 8 einen Durchbruch auf. Das Auspuffendrohr 10 ist mit seinem intern des Auslassraumes 15 angeordneten Eingangsabschnitt 10a bis zum Verdampfer 9 hingeführt und setzt sich außerhalb des Schalldämpfers 8 ausgangs des Verdampfers 9 im Bereich einer Ausgangsöffnung 9" von dessen Gehäuse 9' mit seinem Ausgangsabschnitt 10b fort. Auch in diesem Ausführungsbeispiel weist der Verdampfer 9 einen unteren Anschlussstutzen 20, der an einer Zuleitung 22 für flüssiges Kreislaufmedium angeschlossen ist, und einen oberen Anschlussstutzen 21 auf, der an einer Ableitung 23 für das dampfförmige Medium angeschlossen ist. In Fig. 4 ist die Anordnung dieses Verdampfers 9 im Nutzfahrzeug 1 ebenfalls durch ein am Schalldämpfer 8 schwarz eingefärbtes Feld sichtbar gemacht.

Im Fall des Nutzfahrzeugs gemäß Fig. 7 kommt vorzugsweise ebenfalls ein Schalldämpfer 8 zur Anwendung, der jenen von Fig. 5, 6 entspricht, aber den Verdampfer 9 an anderer Stelle, nämlich oben außen angebaut aufweist. Es sind daher auch in Fig. 7, 8 gleiche bzw. einander entsprechende Teile mit gleichem Bezugszeichen angezogen. In diesem Beispiel ist der Verdampfer 9 - wie gut an Fig. 8 ersichtlich - mit seinem Gehäuse oben an der Umfangsaußenwand 13 des Schalldämpfers 8 angebaut. In diesem Bereich weist die Umfangsaußenwand 13 des Schalldämpfers 8 einen Durchbruch auf. Das Auspuffendrohr 10 ist mit seinem Eingangsabschnitt 10a innerhalb des Auslassraumes 15 im Bereich des diesen begrenzenden Bodens 12 bis zum Verdampfer 9 hingeführt und setzt sich außerhalb des Schalldämpfers 8 ausgangs des Verdampfers 9 mit seinem im Wesentlichen vertikal hinter dem Fahrerhaus 3 angeordneten Ausgangsabschnitt 10b fort. Dieser ist durch mehrere Halter und Streben 10c lagemäßig in Bezug auf den Schalldämpfer 8 stabilisiert.

Im Fall des Nutzfahrzeugs 1 gemäß Fig. 9 kommt der gleiche bzw. ein ähnlicher Schalldämpfer 8 wie im Nutzfahrzeug gemäß Fig. 4 zur Anwendung, jedoch ist der Verdampfer 9 hier nicht am Schalldämpfer 8 angebaut, sondern in einen Endabschnitt 10b des hinter dem Fahrerhaus 3 hochgezogenen Auspuffendrohres 10 integriert, welcher Endabschnitt 10b - wie aus Fig. 10 ersichtlich - sich ausgangs des Schalldämpfers 8 anschließt. Der Verdampfer 9 ist dabei entweder in diesen Auspuffendrohr-Abschnitt 10b eingebaut, und zwar vorzugsweise benachbart zum Schalldämpfer 8 oder nicht weit von diesem beabstandet, oder ersetzt den Auspuffendrohr-Abschnitt 10b partiell. Das Auspuffendrohr 10 ist dabei auch hier in Bezug auf den Schalldämpfer 8 durch spezielle Halter/Verstrebungen 10c lagestabilisiert.

Auch in den Beispielen gemäß 7, 8 und 9, 10 weist der Verdampfer 9 einen unteren Anschlussstutzen 20, an dem eine Zuleitung 22 für das flüssige Kreislaufmedium angeschlossen ist, und einen oberen Anschlussstutzen 21 auf, an dem eine Abführleitung 23 für das dampfförmige Kreislaufmedium angeschlossen ist. Die Lage dieses Verdampfers 9 am Nutzfahrzeug gemäß Fig. 9 ist dort ebenfalls durch ein schwarz eingefärbtes Feld sichtbar gemacht.

Im Fall des Nutzfahrzeugs 1 gemäß Fig. 11 kommt ein gegenüber den vorgenannten Varianten anderer Schalldämpfer 8 zur Anwendung. Dabei ist der Schalldämpfer 8 durch einen hinter dem Fahrerhaus 3 im Wesentlichen vertikal angeordneten Hohlzylinder 25 gebildet, der oben und unten durch je einen Boden 26 bzw. 27 verschlossen ist. Dieser Schalldämpfer 8 ist - wie gut aus Fig. 12 ersichtlich - über seinen Boden 26 am zuströmseitigen Abschnitt 28/1 und über seinen Boden 27 am abströmseitigen Abschnitt 28/2 des hinter dem Fahrerhaus 3 hochgezogenen Auspuffrohres 28 angeschlossen. In diesen Schalldämpfer 8 sind der Abgasnachbehandlung dienende Katalysatoren und/oder Filter (nicht dargestellt) sowie der Verdampfer 9 integriert. Dieser Verdampfer 9 weist ebenfalls einen unteren Anschlussstutzen 20 und einen oberen Anschlussstutzen 21 auf, die durch die hohlzylindrische Wand 25 des Schalldämpfers 8 hindurch aus diesem herausführt und dort außen (20) mit der Zuleitung 22 für das flüssige Kreislaufmedium bzw. (21) mit der Ableitung 23 für das dampfförmige Kreislaufmedium verbunden sind. In diesem Beispiel ist das Auspuffrohr 28 mit dem Schalldämpfer 8 durch Halter und Verstrebungen 29 gegenüber dem zuströmseitigen Teil des Abgasstranges 7 und gegenüber dem Fahrgestell 2 lagefixiert. In Fig. 11 ist die Lage des Verdampfers 9 am dortigen Nutzfahrzeug 1 ebenfalls durch ein am Schalldämpfer 8 schwarz eingefärbtes Feld kenntlich gemacht.

Der Verdampfer 9 weist eine solche Bauart und Konstruktion auf, die geeignet ist, um das über die Zuleitung 22 zugeführte flüssige Kreislaufmedium bei seiner Durchströmung unter Zuhilfenahme der thermischen Restwärmeausnutzung des vorbeiströmenden Abgases in seinen dampfförmigen Aggregatzustand zu überführen. Das zugeführte flüssige Kreislaufmedium kann, muss jedoch nicht, aufgrund eines vorherigen Wärmetausches im Wärmerückgewinnungskreislauf schon vorgewärmt sein. Das mittels des Verdampfers 9 in seinen dampfförmigen Aggregatzustand überführte Kreislaufmedium wird über die Ableitung 23 im Wärmerückgewinnungskreislauf einem Expander zugeführt, der die Dampfenergie in mechanische Energie umsetzt, welche antriebsmäßig an der Kurbelwelle des Verbrennungsmotors 4 als Zusatzantriebsleistung wirksam wird.

## Patentansprüche

1. Nutzfahrzeug, insbesondere Lastkraftwagen, mit einem Verbrennungsmotor (4), in dessen Abgasstrang (7) ein Schalldämpfer (8) angeordnet ist, und mit einem Wärmerückgewinnungssystem, in dessen Mediumkreislauf wenigstens eine Pumpe, ein Verdampfer (9), ein Expander und ein Kondensator angeordnet sind und die Abwärme des Verbrennungsmotors (4) und/oder heißer Motoraggregate sowie heißer Betriebsmedien in leistungssteigernde Nutzenergie umwandelbar ist, **dadurch gekennzeichnet, dass** der im Mediumkreislauf des Wärmerückgewinnungssystems vorhandene Verdampfer (9) entweder
- in den Schalldämpfer (8) integriert und dort entweder in das Auspuffendrohr (10) eingebaut ist oder dieses partiell ersetzt, oder
- außen am Schalldämpfer (8) angebaut ist und sich das Auspuffendrohr (10) mit seinem Endabschnitt (10b) anschließt, oder
- in das vom Schalldämpfer (8) abgehende und hinter dem Fahrerhaus (3) hochgezogene Auspuffendrohr (10) integriert und dabei entweder in dieses eingebaut ist oder dieses partiell ersetzt, oder
- in einem Schalldämpfer (8) integriert ist, der in ein hinter dem Fahrerhaus (3) hochgezogenes Auspuffrohr (28) eingebaut ist.

2. Nutzfahrzeug nach Anspruch 1, **dadurch gekennzeichnet, dass** der Schalldämpfer (8) einen vorderen Boden (11), einen hinteren Boden (12) und eine die beiden Böden (11, 12) miteinander verbindende umlaufende Umfangsaußenwand (13), außerdem einen durch eine Zwischenwand (14) von einem Einlassraum (16) getrennten Auslassraum (15), ein in den Einlassraum (16) ausmündendes Einlassrohr (17) und ein mit einem Eingangsabschnitt (10a) im Auslassraum (15) angeordnetes, dort den Verdampfer (9) aufnehmendes Auspuffendrohr (10) aufweist, das mit seinem Ausgangsabschnitt (10b) nach dem Verdampfer (9) im Bereich des den Auslassraum (15) begrenzenden Bodens (12) entweder durch diesen oder durch die Umfangsaußenwand (13) aus dem Schalldämpfer (8) herausgeführt ist.

3. Nutzfahrzeug nach Anspruch 2, **dadurch gekennzeichnet, dass** der Verdampfer (9) innen an dem den Auslassraum (15) begrenzenden Boden (12) des Schalldämpfers (8) befestigt ist.

4. Nutzfahrzeug nach einem der Ansprüche 2 und 3, **dadurch gekennzeichnet, dass** am Verdampfer (9) ein für die Einspeisung des flüssigen Kreislaufmediums dienender Anschlussstutzen (20) und ein für die Ableitung des in dampfförmigen Aggregatzustand überführten Kreislaufmediums dienender Anschlussstutzen (21) angeordnet sind, welche Anschlussstutzen (20, 21) vom Verdampfer (9) ausgehend durch den benachbarten Boden (12) oder benachbarten Bereich der Umfangsaußenwand (13) des Schalldämpfers (8) hindurch aus diesem herausgeführt und dort (20) mit einer Zuleitung (22) für das flüssige Kreislaufmedium beziehungsweise (21) mit einer Ableitung (25) für das dampfförmige Kreislaufmedium verbunden sind.

5. Nutzfahrzeug nach Anspruch 1, **dadurch gekennzeichnet, dass** der Schalldämpfer (8) einen vorderen Boden (11), einen hinteren Boden (12) und eine Umfangaußenwand (13), außerdem ein Einlassrohr (17) und ein Auspuffendrohr (10) aufweist, das im Bereich eines Bodens (11, 12) entweder durch diesen oder durch die Umfangsaußenwand (13) aus dem Schalldämpfer (8) herausgeführt und dann nach dem dort außen am Schalldämpfer (8) angebauten Verdampfer (9) weitergeführt ist.

6. Nutzfahrzeug nach Anspruch 1, **dadurch gekennzeichnet, dass** der Schalldämpfer (8) einen vorderen Boden (11), einen hinteren Boden (12) und eine die beiden Böden (11, 12) miteinander verbindende Umfangsaußenwand (13), außerdem ein Einlassrohr (7) und ein Auspuffendrohr (10) aufweist, das im Bereich eines Bodens (11, 12) entweder durch diesen oder durch die Umfangsaußenwand (13) aus dem Schalldämpfer (8) herausgeführt und dann hinter dem Fahrerhaus (3) hochgezogen ist, und dass der Verdampfer (9) benachbart zum Schalldämpfer (8) beziehungsweise nicht weit von diesem beabstandet in einen Abschnitt (10b) des Auspuffendrohrs (10) integriert ist, wobei der Verdampfer (9) in diesen Auspuffendrohr-Abschnitt (10b) entweder eingebaut ist oder den Endrohr-Abschnitt (10b) partiell ersetzt.

7. Nutzfahrzeug nach einem der Ansprüche 5 und 6, **dadurch gekennzeichnet, dass** der Verdampfer (9) einen mit einer Zuleitung (22) für flüssiges Kreislaufmedium verbundenen Anschlussstutzen (20) und einen mit einer Ableitung (23) für das in dampfförmigen Aggregatzustand überführte Kreislaufmedium verbundenen Anschlussstutzen (21) aufweist.

8. Nutzfahrzeug nach Anspruch 1, **dadurch gekennzeichnet, dass** der Schalldämpfer (8) durch einen hinter dem Fahrerhaus (3) im Wesentlichen vertikal angeordneten Hohlzylinder (25) gebildet ist, der oben und unten durch je einen Boden (26, 27) verschlossen und über diese Böden (26, 27) einerseits am zuströmseitigen Abschnitt (28/1), andererseits am abströmseitigen Abschnitt (28/2) eines hinter dem Fahrerhaus (3) hochgezogenen Auspuffrohres (28) angeschlossen ist, dass in diesen Schalldämpfer (8) der Verdampfer (9) integriert ist, und dass ein Anschlussstutzen (20) für die Einspeisung des flüssigen Kreislaufmediums und ein Anschlussstutzen (21) für die Ableitung des in dampfförmigen Aggregatzustand überführten Kreislaufmediums vom Verdampfer (9) ausgehend durch die hohlzylindrische Wand (25) des Schalldämpfers (8) hindurch seitlich aus diesem herausgeführt und dort außen (20) mit einer Zuleitung für das flüssige Kreislaufmedium bzw. (21) mit einer Ableitung (23) für das dampfförmige Kreislaufmedium verbunden sind.

9. Nutzfahrzeug nach einem der vorhergehenden Ansprüche, **dadurch gekennzeichnet, dass** das dem Verdampfer (9) in flüssigem Zustand zugeführte und mittels diesem unter Ausnutzung der Wärmeenergie des Abgases in dampfförmigen Aggregatzustand überführte Kreislaufmedium über die Ableitung (23) einen Expander zuführbar ist, der die Dampfenergie in mechanische Energie umsetzt, welche antriebsmäßig an der Kurbelwelle des Verbrennungsmotors (4) als Zusatzantriebsleistung wirksam wird.

## Claims

1. Utility vehicle, in particular heavy goods vehicle, having an internal combustion engine (4), in the exhaust tract (7) of which is arranged a silencer (8), and having a heat recovery system, in the medium circuit of which are arranged at least a pump, an evaporator (9), an expander and a condenser, and the waste heat of the internal combustion engine (4) and/or of hot engine assemblies and of hot operating media can be converted into power-increasing useful energy, **characterized in that** the evaporator (9) provided in the medium circuit of the heat recovery system either
- is integrated into the silencer (8) and there is either installed into or partially replaces the exhaust tailpipe (10), or
- is mounted on the outside of the silencer (8) and adjoins the exhaust tailpipe (10) with its end portion (10b), or
- is integrated into the exhaust tailpipe (10) which proceeds from the silencer (8) and which extends upwardly behind the driver's cab (3), and here is either installed into or partially replaces said exhaust tailpipe, or
- is integrated in a silencer (8) which is installed into an exhaust pipe (28) which extends upwardly behind the driver's cab (3).

2. Utility vehicle according to Claim 1, **characterized in that** the silencer (8) has a front base (11), a rear base (12) and an encircling circumferential outer wall (13) which connects the two bases (11, 12) to one another, also an outlet chamber (15) which is separated by a partition (14) from an inlet chamber (16), an inlet pipe (17) which opens into the inlet chamber (16), and an exhaust tailpipe (10) which is arranged with an inlet portion (10a) in the outlet chamber (15) and which there accommodates the evaporator (9), which exhaust tailpipe is guided, downstream of the evaporator (9), with its outlet portion (10b) out of the silencer (8) in the region of the base (12) which delimits the outlet chamber (15), either through said base (12) or through the circumferential outer wall (13).

3. Utility vehicle according to Claim 2, **characterized in that** the evaporator (9) is fastened at the inside to the base (12), which delimits the outlet chamber (15), of the silencer (8).

4. Utility vehicle according to either of Claims 2 and 3, **characterized in that** the evaporator (9) has arranged on it a connecting piece (20), which serves for the infeed of the liquid circuit medium, and a connecting piece (21), which serves for the discharge of the circuit medium which has passed into the vapour state of aggregation, which connecting pieces (20, 21), proceeding from the evaporator (9), are guided out of the silencer (8) through the adjacent base (12) or adjacent region of the circumferential outer wall (13) of said silencer and are connected there (20) to a supply line (22) for the liquid circuit medium and (21) to a discharge line (25) for the vaporous circuit medium.

5. Utility vehicle according to Claim 1, **characterized in that** the silencer (8) has a front base (11), a rear base (12) and a circumferential outer wall (13), and also an inlet pipe (17) and an exhaust tailpipe (10) which, in the region of a base (11, 12), is guided out of the silencer (8) either through said base or through the circumferential outer wall (13) and which is then guided onward to the evaporator (9) mounted there on the outside of the silencer (8).

6. Utility vehicle according to Claim 1, **characterized in that** the silencer (8) has a front base (11), a rear base (12) and a circumferential outer wall (13) which connects the two bases (11, 12) to one another, and also an inlet pipe (7) and an exhaust tailpipe (10) which, in the region of a base (11, 12), is guided out of the silencer (8) either through said base or through the circumferential outer wall (13) and which then extends upwards behind the driver's cab (3), and **in that** the evaporator (9) is integrated, adjacent to or at a short distance from the silencer (8), into a portion (10b) of the exhaust tailpipe (10), wherein the evaporator (9) is either installed into said exhaust tailpipe portion (10b) or partially replaces the tailpipe portion (10b).

7. Utility vehicle according to either of Claims 5 and 6, **characterized in that** the evaporator (9) has a connecting piece (20), which is connected to a supply line (22) for liquid circuit medium, and a connecting piece (21), which is connected to a discharge line (23) for the circuit medium which has passed into the vapour state of aggregation.

8. Utility vehicle according to Claim 1, **characterized in that** the silencer (8) is formed by a hollow cylinder (25) which is arranged in a substantially vertical configuration behind the driver's cab (3) and which is closed off at the top and bottom by in each case one base (26, 27) and which is connected via said bases (26, 27) at one side to the inflow-side portion (28/1) and at the other side to the outflow-side portion (28/2) of an exhaust pipe (28) which extends upwardly behind the driver's cab (3), **in that** the evaporator (9) is integrated into said silencer (8), and **in that** a connecting piece (20) for the infeed of the liquid circuit medium and a connecting piece (21) for the discharge of the circuit medium which has passed into the vapour state of aggregation are guided, proceeding from the evaporator (9), out of the silencer (8) to the side through the hollow cylindrical wall (25) of said silencer and, there, are connected at the outside (20) to a supply line for the liquid circuit medium and (21) to a discharge line (23) for the vaporous circuit medium.

9. Utility vehicle according to one of the preceding claims, **characterized in that** the circuit medium which has been supplied to the evaporator (9) in the liquid state and which, by means of said evaporator, has passed into the vapour state of aggregation utilizing the heat energy of the exhaust gas can be supplied via the discharge line (23) to an expander which converts the vapour energy into mechanical energy which can be imparted in terms of drive to the crankshaft of the internal combustion engine (4) as auxiliary drive power.

## Revendications

1. Véhicule utilitaire, notamment poids lourd, avec un moteur à combustion interne (4) dans la chaîne de gaz d'échappement (7) duquel est disposé un amortisseur de bruit (8) et avec un système de récupération de chaleur dans le circuit d'agent duquel au moins une pompe, un évaporateur (9), un expanseur et un condensateur sont disposés et la chaleur d'échappement du moteur à combustion interne (4) et/ou des agrégats chauds du moteur ainsi que des agents fonctionnels chauds étant transformable en énergie utile augmentant la puissance, **caractérisé en ce que** l'évaporateur (9) présent dans le circuit d'agent du système de récupération de chaleur est :
- intégré dans l'amortisseur de bruit (8) et soit il est encastré dans le tube de fin d'échappement (10) à cet endroit soit il le remplace en partie ; ou
- monté à l'extérieur contre l'amortisseur de bruit (8) et raccordé au tube de fin d'échappement (10) avec sa section d'extrémité (10b) ; ou
- intégré dans le tube de fin d'échappement (10) ressortant de l'amortisseur de bruit (8) et hissé derrière la cabine de conducteur (3) et pour ce faire soit il est encastré dans celle-ci soit il la remplace en partie ; ou
- intégré dans un amortisseur de bruit (8) encastré dans un tube d'échappement (28) hissé derrière la cabine de conducteur (3).

2. Véhicule utilitaire selon la revendication 1, **caractérisé en ce que** l'amortisseur de bruit (8) comporte un fond avant (11), un fond arrière (12) et une paroi extérieure périphérique (13) l'entourant reliant entre eux les deux fonds (11, 12), ainsi qu'une chambre d'échappement (15) séparée d'une chambre d'admission (16) par une paroi intermédiaire (14), un tube d'admission (17) débouchant dans la chambre d'admission (16) et un tube de fin d'échappement (10) disposé, avec une section d'entrée (10a), dans la chambre d'échappement (15) et y recevant l'évaporateur (9), ledit tube ressortant avec sa section de sortie (10b) après l'évaporateur (9) dans la zone du fond (12) délimitant la chambre d'échappement (15) ou ressortant hors de l'amortisseur de bruit (8) à travers elle ou à travers la paroi extérieure périphérique (13).

3. Véhicule utilitaire selon la revendication 2, **caractérisé en ce que** l'évaporateur (9) est fixé à l'intérieur au niveau du fond (12) de l'amortisseur de bruits (8) délimitant la chambre d'échappement (15).

4. Véhicule utilitaire selon l'une quelconque des revendications 2 et 3, **caractérisé en ce qu'**une tubulure de raccordement (20) servant pour l'alimentation en agent en circulation liquide et une tubulure de raccordement (21) servant pour l'évacuation de l'agent en circulation transformé à l'état de vapeur dans l'agrégat sont disposées au niveau de l'évaporateur (9), lesdites tubulures de raccordement (20, 21) sortant de l'amortisseur en partant de l'évaporateur (9) et en traversant le fond (12) connexe ou la zone connexe de la paroi extérieure périphérique (13) de l'amortisseur de bruit (8) et étant reliées à cet endroit (20) à une conduite d'amenée (22) pour l'agent en circulation liquide et/ou (21) à une conduite d'évacuation (25) pour l'agent en circulation évaporé.

5. Véhicule utilitaire selon la revendication 1, **caractérisé en ce que** l'amortisseur de bruit (8) comporte un fond avant (11), un fond arrière (12) et une paroi extérieure périphérique (13) ainsi qu'un tube d'admission (17) et un tube de fin d'échappement (10) qui ressort de l'amortisseur de bruit (8) dans la zone d'un fond (11, 12) en passant soit à travers lui soit à travers la paroi extérieure périphérique (13) avant d'être acheminé, après l'évaporateur (9) fixé à cet endroit, à l'extérieur, au niveau de l'amortisseur de bruit (8).

6. Véhicule utilitaire selon la revendication 1, **caractérisé en ce que** l'amortisseur de bruit (8) comporte un fond avant (11), un fond arrière (12) et une paroi extérieure périphérique (13) reliant entre eux les deux fonds (11, 12) ainsi qu'un tube d'admission (7) et un tube de fin d'échappement (10) qui ressort de l'amortisseur de bruit (8) dans la zone d'un fond (11, 12), soit à travers lui soit à travers la paroi extérieure périphérique (13) puis est hissé derrière la cabine de conducteur (3) et que l'évaporateur (9) est intégré à une section (10b) du tube de fin d'échappement (10), à proximité de l'amortisseur de bruit (8) et/ou non loin de lui, l'évaporateur (9) étant encastré dans cette section de tube de fin d'échappement (10b) ou remplaçant en partie la section de tube d'extrémité (10b).

7. Véhicule utilitaire selon l'une quelconque des revendications 5 et 6, **caractérisé en ce que** l'évaporateur (9) comporte une tubulure de raccordement (20) reliée à une conduite d'amenée (22) prévue pour l'agent en circulation liquide et une tubulure de raccordement (21) reliée à une conduite d'évacuation (23) prévue pour l'agent en circulation transformé à l'état de vapeur dans l'agrégat.

8. Véhicule utilitaire selon la revendication 1, **caractérisé en ce que** l'amortisseur de bruit (8) est formé par un cylindre creux (25) disposé derrière la cabine de conducteur (3) pour l'essentiel verticalement et fermé, en haut et en bas, par un fond (26, 27) respectif et rattaché via ces fonds (26, 27) d'une part à la section (28/1) située en amont, d'autre part à la section (28/2) située en aval d'un tube d'échappement (28) hissé derrière la cabine de conducteur (3), que l'évaporateur (9) est intégré dans cet amortisseur de bruit (8) et qu'une tubulure de raccordement (20) prévue pour l'alimentation en agent en circulation liquide et qu'une tubulure de raccordement (21) prévue pour l'évacuation de l'agent en circulation vaporisé dans l'agrégat ressortent de l'amortisseur latéralement en partant de l'évaporateur (9) et en traversant la paroi (25) cylindrique creuse de l'amortisseur de bruit (8) et y sont reliées, à l'extérieur (20), à une conduite d'amenée d'agent en circulation liquide et/ou (21) à une conduite d'évacuation (23) d'agent en circulation sous la forme de vapeur.

9. Véhicule utilitaire selon l'une quelconque des revendications précédentes, **caractérisé en ce que** l'agent en circulation amené à l'état liquide à l'évaporateur (9) et transformé à l'aide de celui-ci à l'état de vapeur dans l'agrégat en vue d'utiliser l'énergie thermique des gaz d'échappement peut être amené à un expanseur par le biais de la conduite d'évacuation (23), ledit expanseur transformant l'énergie de la vapeur en énergie mécanique pouvant servir, pour l'entraînement, de puissance d'entraînement supplémentaire appliquée au niveau du vilebrequin du moteur à combustion interne (4).
